# EUROPEAN PATENT SPECIFICATION

(11) **EP 1 799 971 B1**
(45) Date of publication and mention of the grant of the patent: **12.12.2012**
(21) Application number: 05772091.4
(22) Date of filing: 25.07.2005
(51) Int. Cl.: F01K 3/12, F01K 27/00, F02C 6/14, F02C 6/18, F03D 9/02, F03G 6/00, F22B 1/02, F24H 7/04, F01K 3/08

(54) **ELECTRIC POWER PLANT WITH THERMAL STORAGE MEDIUM**
ELEKTRISCHE KRAFTANLAGE MIT WÄRMESPEICHERMEDIUM
CENTRALE ELECTRIQUE A MILIEU DE STOCKAGE THERMIQUE

(30) Priority: 23.07.2004 US 590344 P
(43) Date of publication of application: 27.06.2007
(73) Proprietor: New World Generation Inc., Owen Sound, Ontario N4K 5P5 (CA)
(72) Inventor: NAYEF, Duraid, S., Shelburne, Ontario L0N 1S1 (CA); HOLLIS, Irvine, A., Chatsworth, Ontario N0H 1G0 (CA)
(74) Representative: Johnstone, Douglas Ian
(86) International application number: PCT/CA2005/001168
(87) International publication number: WO 2006/007733

(56) References cited:
- EP-A1- 1 577 549
- US-A- 3 596 034
- US-A- 5 384 489

## Description

This invention relates to an electrical power plant and more particularly to an electrical power plant having a solid heat storage medium that is heated by excess electricity produced from an energy source.

Power plants for producing electricity from various energy sources including wind turbines, solar energy, nuclear energy, hot exhaust gases from industrial plants as well as other sources of energy are known. US 5384489 describes a wind powered electricity generating system including wind energy storage whereby wind energy is used to heat a heat transfer fluid. After being heated, the heated fluid is added to an insulated storage tank. The heated thermal fluid is used to generate electricity during periods of low wind speed and or high electricity demand. The heated thermal fluid is introduced to a heat exchanger and is used to create steam in a vapourizer chamber. The steam is then directed to a steam powered electricity generator. The thermal dynamic conversion efficiency of the storage and recovery system described in US 5384489 is said to be low. Various fluids are suggested as the heat transfer fluid, including water. The storage tank is not pressurized and the heat transfer fluid is in liquid form as the heat transfer fluid is stated to be at atmospheric pressure.

Previous systems are inefficient and cannot be used to store energy at high temperatures. For example, the system described in US 5384489 cannot be used to store energy at temperatures exceeding the boiling point of the heat transfer fluid. Also, the system described in US 5384489 operates with a steam turbine that must be operating all of the time as the steam turbine requires at least a 10% flow rate. If the system shuts down for example, in low wind conditions, the system takes some time to start up again.

EP-A1-1577549 discloses a power plant for producing electricity. The power plant has a wind powered electricity generator and a heat storage medium containing resistors which are connected to receive electricity from the wind powered electricity generator. A circuit of tubing contains working fluid circulating between a heat exchanger in the heat storage medium and a steam turbine for driving an electricity generator. Between the steam turbine and the heat exchanger in the circuit is a condenser.

It is an object of the present invention to provide a power plant for producing electricity where the power plant has a solid heat storage medium that can be used to store heat and to transfer or supply heat to be used to produce electricity.

According to one aspect of the present invention, there is provided a power plant for producing electricity, said power plant comprising an energy source connected to one or more first generators to produce electricity, a solid heat storage medium containing a plurality of electrical heaters, said heaters being connected to receive electricity from said one or more first generators, said solid heat storage medium being a heat exchanger and having at least one high pressure heat transfer line located therein, said at least one heat transfer line being arranged so that when water is located within said at least one line, said water receives heat from said solid heat storage medium, a controller arranged to control a flow of water through said at least one heat transfer line, said solid heat storage medium being hot enough to convert said water to steam, said at least one heat transfer line having an outlet connected to drive one or more second generators to produce electricity, there being a steam engine located between said one or more second generators and the outlet, said one or more second generators being connected to a power line to distribute said electricity, said one or more second generators being operable to produce electricity from heat stored within said solid heat storage medium, characterized in that
said solid heat storage medium has a plurality of high pressure heat transfer lines; and
said solid heat storage medium and said one or more second generators are a first stage, there being a second stage having a second heat storage medium, one or more third generators, and heaters in said second heat storage medium connected to receive electricity from said one or more first generators, said second heat storage medium reheating said steam exiting from said first stage steam engine and said steam from said second heat storage medium driving said one or more third generators to produce electricity.

The heaters are connected to receive electricity from the energy source via the first one or more generators in order to store heat in the solid heat storage medium.

The solid heat storage medium may be heated to a high temperature exceeding 100°C and preferably in the range of 200°C to 900°C and still more preferably in a range of 300°C to 900°C and more preferably in the range of 700°C to 900°C. The power plant having a solid heat storage medium from which electricity can be produced may produce electricity in peak hours or when the energy source does not produce sufficient electricity. The power plant for producing electricity having a solid heat storage system from which electricity can be produced may produce electricity under control led conditions where the system can be started up or closed down quickly.

According to another aspect of the present invention, there is provided a method of operating a power plant for generating electricity, said power plant having a solid heat storage medium that is connected to one or more first generators to produce electricity, said solid heat storage medium containing a plurality of electrical heaters, said heaters being connected to receive electricity from said one or more first generators, said solid heat storage medium being a heat exchanger with an outlet from said medium connected via a steam engine to one or more second generators to produce electricity, said solid heat storage medium and said one or more second generators being a first stage, there being a second stage having a second heat storage medium and one or more third generators, and heaters in said second heat storage medium connected to receive electricity from said one or more first generators, said method comprising the steps of:
generating electricity from an energy source connected to said one or more first generators;
directing excess electricity to said solid heat storage medium;
controlling a flow of water through said heat exchanger to receive heat from said solid heat storage medium in a sufficient amount to convert water into steam at an outlet from said solid heat storage medium;
using said steam to drive one or more second electrical generators;
generating electricity from said second heat storage medium and operating said power plant to have said second heat storage medium reheating said steam exiting from said first stage steam engine and said steam from said second heat storage medium driving said one or more third generators to produce electricity; and
controlling the flow of water through said heat exchanger to produce more electricity from said solid heat storage medium during peak hours or less electricity from said solid heat storage medium during non-peak hours, or to shut off the flow of water during non-peak hours when the energy source does not produce sufficient electricity.

An embodiment of the present invention will now be described by way of example with reference to the accompanying drawing in which:

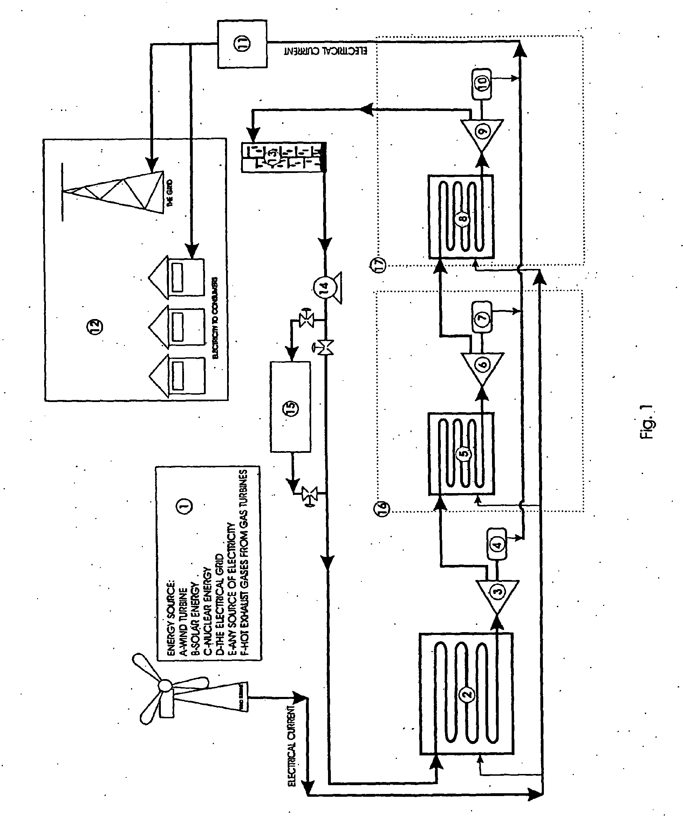

Figure 1 is a schematic flow diagram of a power plant that can produce electricity from heat stored in a solid heat storage medium.

In Figure 1, the energy source is a wind turbine 1. The wind turbine powers a first generators) (not shown) to produce an electric current. The first generator(s) is (are) located within the wind turbine 1. The electric current passes into a series of heaters (not shown). The heaters are interspersed throughout a solid heat storage medium 2 in a first stage. A channel passes through the heat storage medium 2, which also functions as a heat exchanger. Preferably, the channel passes through the heat storage medium in a serpentine path. When the channel is filled with water, heat is transferred from the heat storage medium to the water. The channel can then be said to be a water line. The heat storage medium is sized and operated at a sufficiently
high temperature to convert the water within the water line to steam at an outlet of the heat storage medium 2. The steam enters a steam engine 3 or a steam turbine or any other machinery that is capable of converting steam energy into mechanical or electrical energy, which in turn, powers a second electrical generator 4 to produce electricity. If the energy source is a wind turbine, the wind turbine can be used to build up heat in the heat storage medium 2 while the wind is blowing at a sufficient velocity to produce electricity. Alternatively, the electricity produced by the first generator(s) can be added to the power grid or otherwise consumed, and only the excess electricity produced by the wind turbine and first generator(s) can be used to add heat to the heat storage medium 2. In a further alternative, the power plant has one turbine that produces electricity for immediate consumption and another turbine that produces electricity to add heat to the heat storage medium. The wind turbine can also be used to add heat to the heat storage medium in off peak hours. Then, water can be pumped through the channel to convert water into steam to run the steam engine 3 or a steam turbine or any other machinery that is capable of converting steam energy into mechanical or electrical energy and the electrical generator 4 when the wind is not blowing or, alternatively in peak hours. Though a wind turbine is preferred, other energy sources can be used with the power plant of the present invention or as a back up system to a wind turbine or other energy source. For example, an energy source can be used to produce electricity to add heat to the heat storage medium in off peak hours so that the heat is available to produce electricity during peak hours.

In a second stage 16 of the power plant, steam exiting from the steam engine 3 or a steam turbine or any other machinery that is capable of converting steam energy into mechanical or electrical energy can be directed into the input of a second heat storage medium 5. The heat storage medium 5 also contains a series of electrical heaters (not shown) that are connected to the electrical line from the wind turbine. The steam is reheated in the medium 5 and directed into the inlet of a second steam engine 6 having a third electrical generator(s) 7. The electricity produced by the third electrical generator(s) 7 from the second stage is directed into electrical transformers 11. When steam engines are referred to herein, they can be replaced by a steam turbine or any other machinery or equipment that is capable of converting steam energy into mechanical energy or into electrical energy. When mechanical energy is created, the mechanical energy can then be converted into electrical energy by additional machinery or equipment.

A third stage 17 is located downstream from the second stage 16. Steam from the outlet of the steam engine 6 is directed into a third solid heat storage medium 8. The third heat storage medium 8 contains a series of electrical heaters (not shown) powered by electricity from the wind turbine steam exiting from the third heat storage medium 8 is directed into the inlet of a steam engine 9 driving forth an electrical generator(s) 10. The generator(s) 4, 7, 10 of the first, second and third stages are referred to as the second, third and fourth generator(s) respectively. The electricity from the fourth electrical generator(s) 10 is passed into the transformers 11. Water or water/steam exiting the steam engine 9 is returned to a condenser 13. The outlet from the condenser 13 is pumped through a pump 14 back to the inlet of the first heat storage medium 2. Alternatively, the pump can pump the return water through a water treatment unit 15 if desired. Electricity from the transformers 11 can be passed on to specific users or it can be transferred into an electrical power grid for general distribution to users.

The solid heat storage media of the present invention preferably operate in a range of 400°C to 900°C and provide heat reservoirs. Each storage medium can be constructed of various materials including rocks, soapstone, lava rock, fire brick, alumina brick, magnesia brick, iron blocks, manufactured brick, blocks or other solid materials. The solid thermal storage medium can also be made from particulate matter. The electrical heaters are preferably electrical resistant heaters. Electrical current is supplied by the wind turbine to the electrical heating elements, which convert the electrical energy to heat energy. The heat energy is stored in the heat or thermal storage media 2, 5, 8 of the heat reservoirs. If the heat storage medium has a sufficiently high temperature, the steam will be superheated steam.

The heat storage media are constructed of electrical heating elements and, high pressure, high temperature metal pipes, which are used to convey water/steam inside the heat reservoirs and steam generators. The heat storage media are insulated to maintain the heat for as long as possible. The thermal energy stored in the media can be used to generate steam by means of pumping water through the channel of the heat storage medium. The channel is preferably a water line made up of high temperature, high pressure metal pipes. The pipes are arranged in the continuous serpentine or straight shape inside each of the heat storage media. The pipes provide water/steam lines to and from the steam engines of the various stages. Instead of one waterline extending through the heat storage media, several waterlines can be used.

The power plant shown in Figure 1 has a first stage, a second stage and a third stage, with each stage containing a heat storage medium, a steam engine and a generator(s) to generate electricity supported by the necessary controls. A power plant can be constructed with more or fewer stages than that shown in Figure 1.

After exiting the steam engine in the last stage, the steam/water is recycled back to the heat storage medium 2. Preferably, the water is recycled through the condenser 13, the water pump 14 and the water treatment unit 15 incorporating a make-up water valve (not shown) set up as a bypass with valves as shown. The second stage 16 and third stage 17 are designated with dotted lines. Electrical current from the outlets of the second, third and fourth generators 4, 7 and 10 is directed through an electrical transformer 11 and then to a power grid for distribution or, alternatively, to a unit or units 12 that consume the electricity produced.

The electrical heaters are electrical resistance heaters. The heaters use electrical heating elements to directly heat the thermal storage medium. Electrical current is supplied to the electrical heating elements by the wind turbine 1. The wind turbine is an energy source. Alternate energy sources are solar energy collectors, nuclear energy source, the electrical power grid, any source that provides electricity as direct or alternating current or hot exhaust gasses from gas turbines (to be stored as heat) or any other source of heat energy.

In place of resistance elements, electrical heaters could include resistant bricks, induction heating, microwaves or other sources of heat from electricity.

The steam generated in the heat reservoir and steam generator 2 will exit through metal pipes to the steam engine 3. The steam engine is preferably a piston steam engine, which is used to drive the electrical generator 4. The steam engines can be replaced by steam turbines or any other device for converting steam energy into mechanical energy and/or electrical energy.

Steam leaving the steam engine 3 enters the heat storage medium and steam generator 5 to be reheated to a higher temperature. The steam leaving the heat storage medium and steam generator 5 enters the steam engine 6. The steam will operate the steam engine 6, which in turn operate the electrical generator 7. Steam leaving the steam engine 6 enters the heat storage media and steam generator 8 to be reheated to a higher temperature. The steam leaves the heat storage media and steam generator 8 to enter the steam engine 9. The steam will operate the steam engine 9, which in turn will operate the electrical generator 10.

Low pressure, low temperature steam/water exits the steam engine 9 to enter the condenser 13 where it is condensed to liquid water. The pump 14 draws the liquid water from the condenser 13 to feed the water at high pressure to the heat storage medium 2. The cycle is then repeated. The number of stages can be increased or decreased as desired for different operating conditions in order to optimize cost and efficiencies. The water treatment unit 15 can be incorporated into the cycle for the water treatment. A feedwater heat exchanger (not shown) can be added to the cycle to heat the feedwater before it enters the heat storage medium 2 using the remaining heat in the water exiting the condenser 13. While other heat transfer fluids can be used, water or substantially water is preferred. Additives can be used to maintain water quality.

Preferably, the power plant of the present invention is operated at off peak hours to store heat energy. Subsequently, the stored heat is converted to electricity during peak hours or during a time when the energy source is not producing sufficient electricity.

Any energy source that produces electricity as direct or alternating current can be used including the electrical grid, nuclear and natural gas. The cost of producing electricity will vary with the energy source. Some energy sources will have a higher capital cost but a lower operating cost and other energy sources will have a lower capital cost, but a higher operating cost. Preferably, the energy source is a green energy source such as a wind turbine or solar energy. When hot exhaust gases are used as the energy source, the heat storage medium must be modified to operate with the hot exhaust gases. Regardless of the energy source, the heat energy is stored in the thermal storage medium to be used later at a time to generate steam for the generation of electricity.

The power plant of the present invention is preferably operated to store heat energy during a first time period and to utilize the heat energy stored during a second time period. The first time period is preferably a non-peak power period and the second time period is preferably a peak power period.

## Claims

1. A power plant for producing electricity, said power plant comprising an energy source (1) connected to one or more first generators to produce electricity, a solid heat storage medium (2) containing a plurality of electrical heaters, said heaters being connected to receive electricity from said one or more first generators, said solid heat storage medium (2) being a heat exchanger and having at least one high pressure heat transfer line located therein, said at least one heat transfer line being arranged so that when water is located within said at least one line, said water receives heat from said solid heat storage medium (2), a controller arranged to control a flow of water through said at least one heat transfer line, said solid heat storage medium (2) being hot enough to convert said water to steam, said at least one heat transfer line having an outlet connected to drive one or more second generators (4) to produce electricity, there being a steam engine (3) located between said one or more second generators (4) and the outlet, said one or more second generators (4) being connected to a power line to distribute said electricity, said one or more second generators (4) being operable to produce electricity from heat stored within said solid heat storage medium (2), **characterized in that**
said solid heat storage medium (2) has a plurality of high pressure heat transfer lines; and
said solid heat storage medium (2) and said one or more second generators (4) are a first stage, there being a second stage (16) having a second heat storage medium (5), one or more third generators (7), and heaters in said second heat storage medium (5) connected to receive electricity from said one or more first generators, said second heat storage medium (5) reheating said steam exiting from said first stage steam engine (3) and said steam from said second heat storage medium (5) driving said one or more third generators (7) to produce electricity.

2. The power plant for producing electricity as claimed in claim 1, including a third stage (17) that is substantially similar to said second stage (16), said third stage (17) producing additional electricity beyond that produced by said second stage (16).

3. A method of operating a power plant for generating electricity, said power plant having a solid heat storage medium (2) that is connected to one or more first generators to produce electricity, said solid heat storage medium (2) containing a plurality of electrical heaters, said heaters being connected to receive electricity from said one or more first generators, said solid heat storage medium (2) being a heat exchanger with an outlet from said medium (2) connected via a steam engine (3) to one or more second generators (4) to produce electricity, said solid heat storage medium (2) and said one or more second generators (4) being a first stage, there being a second stage (16) having a second heat storage medium (5) and one or more third generators (7), and heaters in said second heat storage medium (5) connected to receive electricity from said one or more first generators, said method comprising the steps of:
generating electricity from an energy source (1) connected to said one or more first generators;
directing excess electricity to said solid heat storage medium (2);
controlling a flow of water through said heat exchanger to receive heat from said solid heat storage medium (2) in a sufficient amount to convert water into steam at an outlet from said solid heat storage medium (2);
using said steam to drive one or more second electrical generators (4);
generating electricity from said second heat storage medium (5) and operating said power plant to have said second heat storage medium (5) reheating said steam exiting from said first stage steam engine (3) and said steam from said second heat storage medium (5) driving said one or more third generators (7) to produce electricity; and
controlling the flow of water through said heat exchanger to produce more electricity from said solid heat storage medium (2) during peak hours or less electricity from said solid heat storage medium (2) during non-peak hours, or to shut off the flow of water during non-peak hours when the energy source does not produce sufficient electricity.

4. The method as claimed in claim 3, including the step of operating said power plant to heat said solid heat storage medium (2) to a temperature ranging from 300°C to 900°C.

5. The method as claimed in claim 3 or 4, including the step of using said solid heat storage medium (2) to superheat said steam.

6. The method as claimed in claim 3, 4 or 5, including the step of operating said plant to recycle steam/water from said one or more second generators (4) to said second heat storage medium (5).

## Patentansprüche

1. Kraftwerk zur Erzeugung von Elektrizität, wobei das Kraftwerk folgendes umfasst: eine Energiequelle (1), die mit einem oder mehreren ersten Generatoren zur Erzeugung von Elektrizität verbunden ist; ein festes Wärmespeichermedium (2), das eine Mehrzahl von elektrischen Heizvorrichtungen umfasst, wobei die Heizvorrichtungen so angeschlossen sind, dass sie Elektrizität von dem einen oder den mehreren ersten Generatoren aufnehmen, wobei es sich beim festen Wärmespeichermedium (2) um einen Wärmetauscher handelt, in dem sich mindestens eine Hochdruck-Wärmeübertragungsleitung befindet, wobei die mindestens eine Wärmeübertragungsleitung so angeordnet ist, dass dann, wenn sich Wasser in der mindestens einen Leitung befindet, dieses Wasser Wärme aus dem festen Wärmespeichermedium (2) aufnimmt; eine Steuereinrichtung, die so beschaffen ist, dass sie einen Strom von Wasser durch die mindestens eine Wärmeübertragungsleitung steuert, wobei das feste Wärmespeichermedium (2) heiß genug ist, um Wasser in Dampf umzuwandeln, wobei die mindestens eine Wärmeübertragungsleitung einen Auslass aufweist, der so angeschlossen ist, dass er einen oder mehrere zweite Generatoren (4) zur Erzeugung von Elektrizität antreibt, wobei eine Dampfmaschine (3), die zwischen dem einen oder den mehreren zweiten Generatoren (4) und dem Auslass angeordnet ist, vorhanden ist, wobei der eine oder die mehreren zweiten Generatoren (4) an eine Stromleitung zur Verteilung der Elektrizität angeschlossen sind, wobei der eine oder die mehreren zweiten Generatoren (4) in der Weise funktionieren, dass sie Elektrizität aus der im festen Wärmespeichermedium (2) gespeicherten Wärme erzeugen können, **dadurch gekennzeichnet, dass**
das feste Wärmespeichermedium (2) eine Mehrzahl von Hochdruck-Wärmeübertragungsleitungen aufweist;
das feste Wärmespeichermedium (2) und der eine oder die mehreren zweiten Generatoren (4) eine erste Station darstellen, wobei eine zweite Station (16) mit einem zweiten Wärmespeichermedium (5), einem oder mehreren dritten Generatoren (7) und Heizvorrichtungen im zweiten Wärmespeichermedium (5), die zur Aufnahme von Elektrizität aus dem einen oder den mehreren ersten Generatoren angeschlossen sind, vorhanden ist, wobei das zweite Wärmespeichermedium (5) den aus der Dampfmaschine (3) der ersten Station austretenden Dampf nacherwärmt und der Dampf aus dem zweiten Wärmespeichermedium (5) den einen oder die mehreren dritten Generatoren (7) zur Erzeugung von Elektrizität antreibt.

2. Kraftwerk zur Erzeugung von Elektrizität nach Anspruch 1, umfassend eine dritte Station (17), die im wesentlichen ähnlich zur zweiten Station (16) ist, wobei die dritte Station (17) zusätzliche Elektrizität über die in der zweiten Station (16) erzeugte Elektrizität hinaus erzeugt.

3. Verfahren zum Betreiben eines Kraftwerks zur Erzeugung von Elektrizität, wobei das Kraftwerk ein festes Wärmespeichermedium (2) aufweist, das mit einem oder mehreren ersten Generatoren zur Erzeugung von Elektrizität verbunden ist, wobei das feste Wärmespeichermedium (2) eine Mehrzahl von elektrischen Heizvorrichtungen enthält, wobei die Heizvorrichtungen so angeschlossen sind, dass sie Elektrizität von dem einen oder den mehreren ersten Generatoren aufnehmen, wobei es sich beim festen Wärmespeichermedium (2) um einen Wärmetauscher mit einem Auslass aus dem Medium (2) handelt, der über eine Dampfmaschine (3) mit einem oder mehreren zweiten Generatoren (4) zur Erzeugung von Elektrizität verbunden ist, wobei das feste Wärmespeichermedium (2) und der eine oder die mehreren zweiten Generatoren (4) eine erste Station darstellen, wobei eine zweite Station (16) vorhanden ist, die ein zweites Wärmespeichermedium (5) und einen oder mehrere dritte Generatoren (7) aufweist, und Heizvorrichtungen im zweiten Wärmespeichermedium (5) so angeschlossen sind, dass sie Elektrizität aus dem einen oder den mehreren ersten Generatoren aufnehmen, wobei das verfahren die folgenden Stufen umfasst:
das Erzeugen von Elektrizität aus einer Energiequelle (1), die mit dem einen oder den mehreren ersten Generatoren verbunden ist;
das Zuleiten von überschüssiger Elektrizität zum festen Wärmespeichermedium (2);
das Steuern eines Wasserstroms durch den Wärmetauscher in der Weise, dass Wärme aus dem festen Wärmespeichermedium (2) in einer ausreichenden Menge aufgenommen wird, um Wasser in Dampf an einem Auslass aus dem festen Wärmespeichermedium (2) umzuwandeln;
das Verwenden des Dampfes zum Betreiben von einem oder mehreren zweiten elektrischen Generatoren (4);
das Erzeugen von Elektrizität aus dem zweiten Wärmespeichermedium (5) und das Betreiben des Kraftwerks in der Weise, dass das zweite Wärmespeichermedium (5) den aus der Dampfmaschine (3) der ersten Station austretenden Dampf nacherwärmt und der Dampf aus dem zweiten Wärmespeichermedium (5) den einen oder die mehreren dritten Generatoren (7) antreibt, um Elektrizität zu erzeugen; und
das Steuern des Wasserstroms durch den Wärmetauscher, um während der Peakstunden mehr Elektrizität aus dem festen Wärmespeichermedium (2) zu erzeugen oder während der Nicht-Peakstunden weniger Elektrizität aus dem festen Wärmespeichermedium (2) zu erzeugen oder um den Wasserstrom während der Nicht-Peakstunden abzustellen, wenn die Energiequelle nicht ausreichend Elektrizität erzeugt.

4. Verfahren nach Anspruch 3, umfassend die Stufe des Betreibens des Kraftwerks zur Erwärmung des festen Wärmespeichermediums (2) auf eine Temperatur im Bereich von 300 bis 900 °C.

5. Verfahren nach Anspruch 3 oder 4, umfassend die Stufe der Verwendung des festen Wärmespeichermediums (2) zur Überhitzung des Dampfes.

6. Verfahren nach Anspruch 3, 4 oder 5, umfassend die Stufe des Betreibens des Kraftwerks zur Rückführung von Dampf/Wasser aus dem einen oder den mehreren zweiten Generatoren (4) in das zweite Wärmespeichermedium (5).

## Revendications

1. Centrale électrique pour produire de l'électricité, ladite centrale électrique comprenant une source d'énergie (1) raccordée à un ou plusieurs premiers générateurs pour produire de l'électricité, un milieu accumulateur de chaleur solide (2) contenant une pluralité d'éléments chauffants électriques, lesdits éléments chauffants étant raccordés pour recevoir de l'électricité en provenance desdits un ou plusieurs premiers générateurs, ledit milieu accumulateur de chaleur solide (2) étant un échangeur de chaleur et ayant au moins une conduite de transfert de chaleur haute pression située à l'intérieur, ladite au moins une conduite de transfert de chaleur étant agencée de sorte que lorsque de l'eau est située à l'intérieur de ladite au moins une conduite, ladite eau reçoit de la chaleur en provenance dudit milieu accumulateur de chaleur solide (2), un régulateur agencé pour réguler un écoulement d'eau à travers ladite au moins une conduite de transfert de chaleur, ledit milieu accumulateur de chaleur solide (2) étant assez chaud pour convertir ladite eau en vapeur d'eau, ladite au moins une conduite de transfert de chaleur ayant un refoulement raccordé pour entraîner au moins un ou plusieurs deuxièmes générateurs (4) à produire de l'électricité, un moteur à vapeur (3) étant situé entre lesdits un ou plusieurs deuxièmes générateurs (4) et le refoulement, lesdits un ou plusieurs deuxièmes générateurs (4) étant raccordés à une ligne électrique pour distribuer ladite électricité, lesdits un ou plusieurs deuxièmes générateurs (4) étant opérationnels pour produire de l'électricité à partir de chaleur stockée à l'intérieur dudit milieu accumulateur de chaleur solide (2), **caractérisé en ce que**
ledit milieu accumulateur de chaleur solide (2) a une pluralité de conduites de transfert de chaleur haute pression ; et
ledit milieu accumulateur de chaleur solide (2) et lesdits un ou plusieurs deuxièmes générateurs (4) sont un premier étage, un deuxième étage (16) ayant un second milieu accumulateur de chaleur solide (5), un ou plusieurs troisièmes générateurs (7), et des éléments chauffants dans ledit second milieu accumulateur de chaleur (5) raccordés pour recevoir de l'électricité en provenance desdits un ou plusieurs premiers générateurs, ledit second milieu accumulateur de chaleur (5) réchauffant ladite vapeur d'eau sortant dudit moteur à vapeur de premier étage (3) et ladite vapeur d'eau en provenance dudit second milieu accumulateur de chaleur (5) entraînant lesdits un ou plusieurs troisièmes générateurs (7) afin qu'ils produisent de l'électricité.

2. Centrale électrique pour produire de l'électricité selon la revendication 1, comprenant un troisième étage (17) qui est sensiblement similaire audit deuxième étage (16), ledit troisième étage (17) produisant de l'électricité supplémentaire en plus de celle produite par ledit deuxième étage (16).

3. Procédé d'exploitation d'une centrale électrique pour générer de l'électricité, ladite centrale électrique ayant un milieu accumulateur de chaleur solide (2) qui est raccordé à un ou plusieurs premiers générateurs pour produire de l'électricité, ledit milieu accumulateur de chaleur solide (2) contenant une pluralité d'éléments chauffants électriques, lesdits éléments chauffants étant raccordés pour recevoir de l'électricité en provenance desdits un ou plusieurs premiers générateurs, ledit milieu accumulateur de chaleur solide (2) étant un échangeur de chaleur avec un refoulement depuis ledit milieu (2) raccordé via un moteur à vapeur (3) à un ou plusieurs deuxièmes générateurs (4) pour produire de l'électricité, ledit milieu accumulateur de chaleur solide (2) et lesdits un ou plusieurs deuxièmes générateurs (4) étant un premier étage, un deuxième étage (16) ayant un second milieu accumulateur de chaleur (5) et un ou plusieurs troisièmes générateurs (7), et des éléments chauffants dans ledit second milieu accumulateur de chaleur (5) raccordé pour recevoir de l'électricité en provenance desdits un ou plusieurs premiers générateurs, ledit procédé comprenant les étapes de :
génération d'électricité depuis une source d'énergie (1) raccordée auxdits un ou plusieurs premiers générateurs ;
direction de l'électricité en excès vers ledit milieu accumulateur de chaleur solide (2) ;
régulation d'un écoulement d'eau à travers ledit échangeur de chaleur pour recevoir de la chaleur en provenance dudit milieu accumulateur de chaleur solide (2) en quantité suffisante pour convertir l'eau en vapeur d'eau au niveau d'un refoulement depuis ledit milieu accumulateur de chaleur solide (2) ;
utilisation de ladite vapeur d'eau pour entraîner un ou plusieurs deuxièmes générateurs électriques (4) ;
génération d'électricité depuis ledit second milieu accumulateur de chaleur solide (5) et exploitation de ladite centrale électrique pour que ledit second milieu accumulateur de chaleur (5) réchauffe ladite vapeur d'eau sortant dudit moteur à vapeur (3) de premier étage et ladite vapeur d'eau en provenance dudit second milieu accumulateur de chaleur (5) entraînant lesdits un ou plusieurs troisièmes générateurs (7) afin qu'ils produisent de l'électricité ; et
régulation de l'écoulement d'eau à travers ledit échangeur de chaleur pour produire plus d'électricité depuis ledit milieu accumulateur de chaleur (2) pendant les heures de pointe ou moins d'électricité depuis ledit milieu accumulateur de chaleur solide (2) pendant les heures creuses, ou pour fermer l'écoulement d'eau pendant les heures creuses, ou pour couper l'écoulement d'eau pendant les heures creuses lorsque la source d'énergie ne produit pas assez d'électricité.

4. Procédé selon la revendication 3, comprenant l'étape d'exploitation de ladite centrale électrique pour chauffer ledit milieu accumulateur de chaleur solide (2) à une température allant de 300 °C à 900 °C.

5. Procédé selon la revendication 3 ou 4, comprenant l'étape d'utilisation dudit milieu accumulateur de chaleur solide (2) pour surchauffer ladite vapeur d'eau.

6. Procédé selon la revendication 3, 4 ou 5, comprenant l'étape d'exploitation de ladite centrale pour recycler la vapeur d'eau/l'eau en provenance desdits un ou plusieurs deuxièmes générateurs (4) dans ledit second milieu accumulateur de chaleur solide (5).
